**Europäisches Patentamt**

(19) **European Patent Office**

**Office européen des brevets**

(11) Veröffentlichungsnummer: **0 052 177**
**A1**

(12) # EUROPÄISCHE PATENTANMELDUNG

(21) Anmeldenummer: **81105165.5**

(22) Anmeldetag: **03.07.81**

(51) Int. Cl.³: **F 16 K 31/06**
**H 01 F 7/16**

(30) Priorität: **15.11.80 DE 3043274**

(43) Veröffentlichungstag der Anmeldung:
**26.05.82 Patentblatt 82/21**

(84) Benannte Vertragsstaaten:
**AT CH DE FR GB LI NL SE**

(71) Anmelder: **Wabco Fahrzeugbremsen GmbH**
**Am Lindener Hafen 21 Postfach 91 12 80**
**D-3000 Hannover 91(DE)**

(72) Erfinder: **Unger, Herbert**
**Eichendorffstrasse 10**
**D-3257 Springe(DE)**

(72) Erfinder: **Christoffers, Bernd**
**K.-Schumacher-Strasse 4**
**D-3015 Wennigsen(DE)**

(72) Erfinder: **Meise, Günther**
**Hoher Kamp 22a**
**D-3012 Langenhagen(DE)**

(72) Erfinder: **Höfler, Siegfried**
**Kleine Pfahlstrasse 8**
**D-3000 Hannover 1(DE)**

(74) Vertreter: **Schrödter, Manfred**
**WABCO Fahrzeugbremsen GmbH Postfach 91 12 80 Am**
**Lindener Hafen 21**
**D-3000 Hannover 91(DE)**

(54) **Magnetventil.**

(57) Bei einem Magnetventil sind sowhol der Luftspalt (1) zwischen Kern (4) und Anker (5) als auch der Luftspalt (2, 3) zwischen Joch (19, 20) und Anker (5) mit einer magnetisch leitenden Flüssigkeit ausgefüllt. Auch der Luftspalt zwischen der Spule (11) und dem Gehäuse (12) kann mit der Flüssigkeit ausgefüllt sein.

FIG. 1

EP 0 052 177 A1

Croydon Printing Company Ltd.

- 1 -

Hannover, den 30.06.81
WP 53/80 A./Gr

WABCO Fahrzeugbremsen GmbH, Hannover

Magnetventil

Die Erfindung bezieht sich auf ein Magnetventil gemäß dem Oberbegriff des Patentanspruchs 1.

Beim Bau von Magnetventilen ist man bestrebt, mit möglichst wenig Antriebskraft bzw. Stromstärke eine möglichst hohe Magnetkraft auf den beweglichen Anker bzw. das daran befestigte Ventilglied zu erreichen. Diese Kraft soll weiter mit wachsendem Hub des Ankers bzw. wachsender Luftspaltgröße nicht wesentlich abfallen. Das Magnetventil soll also einen hohen Wirkungsgrad bzw. geringen Energieverbrauch und eine möglichst gerade Kennlinie haben. Ist dies der Fall, läßt sich auch die bei Dauererregung erzeugte Verlustwärme leichter abführen.

Ein Problem beim Bau von Magnetventilen der Pneumatik oder Hydraulik ist der Luftspalt im magnetischen Kreis zwischen Joch und Anker. Um Öffnungs- bzw. Schließbewegungen durch den Hub des Ankers zu erreichen, muß der Anker durch das Ankerführungsrohr oder das Joch geführt werden. Bedingt durch die Fertigungstoleranzen dieser Führungen entsteht dort ein Luftspalt gleichbleibender Größe. Luft ist aber ein sehr schlechter magnetischer Leiter.

Um den Wirkungsgrad des Magnetsystems zu verbessern, könnte man den Luftspalt immer mehr verengen, was aber aus fertigungstechnischen Gründen nur bis zu einer bestimmten Größenordnung machbar ist. Gleichzeitig sollte keine Reibung durch die Führung entstehen.

Auch der veränderliche Luftspalt zwischen dem Anker und dem Kern erhöht den Widerstand des magnetischen Kreises und verschlechtert damit den Wirkungsgrad.

Der Erfindung liegt die Aufgabe zugrunde, bei einem Magnetventil der eingangs genannten Art den schädlichen Einfluß der Luftspalte im magnetischen Kreis weitgehend zu verringern.

Diese Aufgabe wird durch die im Patentanspruch 1 enthaltene Erfindung gelöst.

Die Erfindung soll im folgenden an Hand zweier Ausführungsbeispiele von Magnetventilen der eingangs genannten Art, die in einer Zeichnung dargestellt sind, näher erläutert werden. Die Zeichnung zeigt schematisch im Querschnitt in

Fig. 1 ein Magnetventil, dessen Anker in einer Bohrung des Kerns geführt ist und in

Fig. 2  ein anderes Magnetventil, dessen Anker mittels
einer ringförmigen Membran geführt ist.

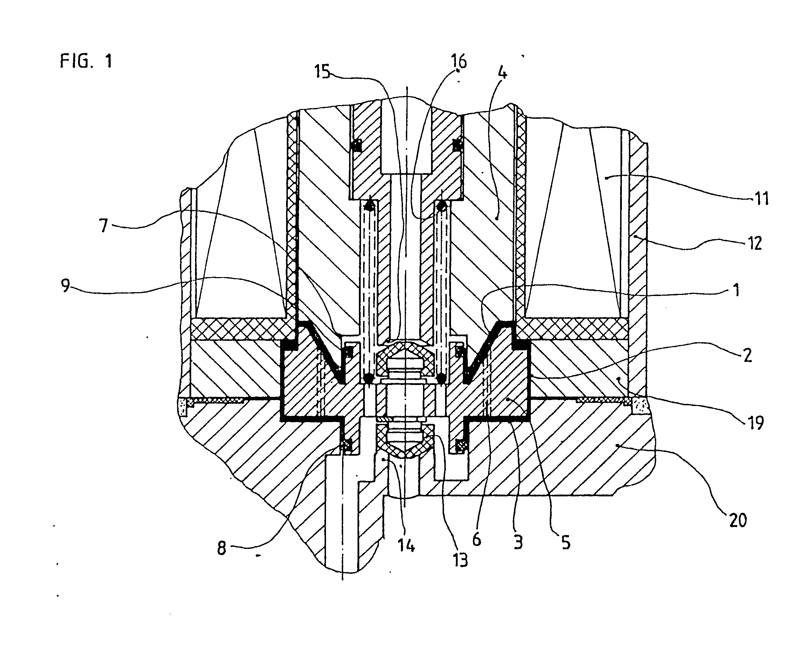

Der magnetische Kreis des in der Fig. 1 dargestellten
Magnetventils besteht aus einem Kern 4, einem beweglichen Anker 5, einem Joch 19,20 und einem Gehäuse
12 aus magnetisch leitendem Material. Anstelle eines
geschlossenen Gehäuses 12 und Jochs 19,20 können andere
anders geformte Eisenteile zur Rückführung des magnetischen Flusses verwendet werden. Ein geschlossenes
Gehäuse (Topfkern) ist jedoch besonders wirtschaftlich.
Zur Erregung dient eine Spule 11. Der Anker 2 ist
in einer Bohrung 7 im Kern 4 geführt. Die Führung
erfolgt durch Dichtringe 8,9. Die sich zwischen dem
beweglichen Anker 5 und den feststehenden Teilen ergebenden Luftspalte 1,2,3 sind mit einer magnetisch
leitenden Flüssigkeit ausgefüllt. Dabei verhindern
die Dichtringe 8,9 ein Austreten der Flüssigkeit.
Wenn der Anker 5 an den Kern 4 angezogen wird, muß
die im Spalt 1 befindliche Flüssigkeit zum Spalt 3
transportiert werden. Dies kann einmal über den Spalt
2 erfolgen. Es können aber auch bei Bedarf zusätzliche
Bohrungen 6 durch den Anker 5 vorhanden sein, durch
welche die Verlagerung der magnetischen Flüssigkeit
beschleunigt wird. Hierdurch erhöht sich die Schaltgeschwindigkeit des Ventils .

Falls die Volumenvergrößerung im Spalt 3 nicht genau
der Volumenverkleinerung im Spalt 1 entsprechen sollte,
kann an den Spalt 3 ein (nicht dargestellter) Ausgleichsbehälter für die magnetisch leitende Flüssigkeit
angeschlossen sein.

Am Anker 5 ist ein Ventilkörper 13 befestigt, welcher
in Verbindung mit Ventilsitzen 14,15 Einlaß- und Auslaßventile bildet. Durch eine Druckfeder 16 wird der Anker 5 im nicht erregten Zustand vom Kern 4 getrennt.

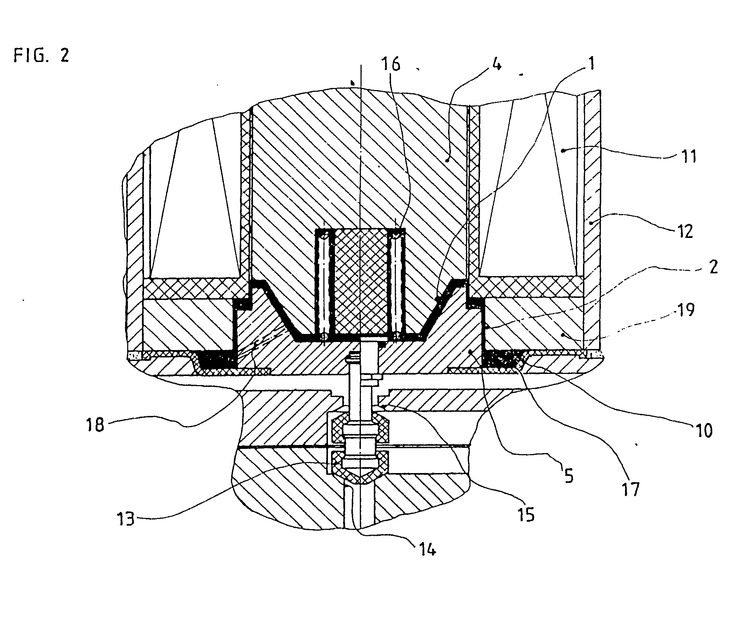

In Fig. 2 ist eine Variante des Magnetventils der Erfindung dargestellt. Hier wird der Anker 5 mittels einer ringförmigen Membran 10 geführt, deren äußerer Rand am Joch 19 und deren innerer Rand am Anker 5 befestigt ist. Die Membran 10 dient gleichzeitig zum Einschluß der magnetisch leitenden Flüssigkeit. Wenn der Anker 5 an den Kern 4 angezogen wird, wird die magnetische Flüssigkeit aus dem Spalt 1 in einen ringförmigen Raum 17 verdrängt. Diese Verdrängung erfolgt entweder durch den Spalt 2 oder durch Verbindungsbohrungen 18 durch den Anker 5. Die während des Anziehens in den ringförmigen Raum 17 strömende Flüssigkeit bewirkt dabei ein ballonartiges Aufblähen der Membran 10. Die übrigen Bauteile des Magnetventils der Fig. 2 entsprechen denen der Fig. 1.

Bei der Bauart nach Fig. 2 ist es auch möglich, die magnetische Flüssigkeit mit Überdruck einzubringen. Bei dieser Variante kann die sonst notwendige Druckfeder 16 entfallen, da die Rückstellkraft jetzt durch die magnetische Flüssigkeit, deren Druck durch die elastische Verformung der Membran 10 aufrechterhalten wird, erzeugt wird.

Eine weitere vorteilhafte Verbesserung der Magnetventile nach Fig. 1 und 2 läßt sich dadurch erzielen, daß auch der Spalt zwischen der Spule 11 und dem Gehäuse 12 des Magnetventils mit der magnetisch leitenden Flüssigkeit ausgefüllt wird. Die Flüssigkeit dient hier zur Wärmeübertragung zwischen Spule und Gehäuse. Dies ergibt im Vergleich zu einem Eingießen mit Epoxydharz eine erhöhte Wärmeableitung. Außerdem ist dabei die Bildung von Luftblasen, wie sie beim Vergießen mit Epoxydharz vorkommen kann, ausgeschlossen.

Bei Bedarf kann die magnetisch leitende Flüssigkeit zwischen Spule und Gehäusewand durch einen (nicht dargestellten Kanal) mit der Flüssigkeit in den Spalten 1,2,3 des Magnetsystems verbunden sein.

Durch den erfindungsgemäßen Einsatz von magnetisch leitender Flüssigkeit, welche winzige Ferritpartikel enthält, und deren magnetische Leitfähigkeit um etwa 100x besser ist als die von Luft, kann der Wirkungsgrad des Magnetventils wesentlich verbessert werden. Außerdem kann der Elektromagnet des Ventils verkleinert werden, was einmal eine Gewichtsreduzierung und zum anderen eine Kostenersparnis bedeutet. Durch das Ausfüllen der Spalte mit der magnetisch leitenden Flüssigkeit erfolgt ferner bei der Hubbewegung des Ankers eine Dämpfung, die das sonst harte Auftreffen des Dichtelementes auf die Dichtkanten verhindert. Damit wird die Lebensdauer der Dichtelemente verlängert. Die magnetisch leitende Flüssigkeit erzeugt gleichzeitig eine Schmierschicht, so daß die Reibung des Ankers an der Führung bzw. am Joch verringert wird. Das bedeutet ebenfalls eine Verbesserung des Wirkungsgrades. Außerdem kann auch der Korrosionsschutz für Anker und Joch entfallen, so daß minderwertige Werkstoffe verwendet werden können. Ein weiterer Vorteil ist die gute thermische Leitfähigkeit, die es erlaubt, die Spule stärker zu belasten, ohne das eine thermische Überlastung eintritt.

Patentansprüche

1. Magnetventil mit einem feststehenden Kern und einem beweglichen Anker, welcher durch die von wenigstens einer Spule erzeugte Magnetkraft bewegbar ist, sowie mit Teilen zur Rückführung des magnetischen Flusses, insbesondere einem Gehäuse und einem Joch, dadurch gekennzeichnet, daß im Spalt (1) zwischen dem Kern (4) und dem Anker (5) und/oder im Spalt (2,3) zwischen dem Joch (19,20) und dem Anker (5) eine magnetisch leitende Flüssigkeit eingebracht ist.

2. Magnetventil nach Anspruch 1, dadurch gekennzeichnet, daß der Anker (5) mit Bohrungen (6,18) zum Volumenausgleich der magnetisch leitenden Flüssigkeit versehen ist.

3. Magnetventil nach Ansprüchen 1 bis 2, dadurch gekennzeichnet, daß der Anker (5) in einer Bohrung (7) des Kerns (4) geführt ist, wobei die Führung durch Dichtringe (8,9) erfolgt, die gleichzeitig zum Einschluß der magnetisch leitenden Flüssigkeit dienen (Fig. 1).

4. Magnetventil nach Anspruch 1 bis 2, dadurch gekennzeichnet, daß der Anker (5) mittels einer ringförmigen Membran (10) geführt ist, deren äußerer Rand am Joch (19) und deren innerer Rand am Anker (5) befestigt ist, und die gleichzeitig zum Einschluß der magnetisch leitenden Flüssigkeit dient (Fig. 2).

5. Magnetventil nach Anspruch 4, dadurch gekennzeichnet, daß die magnetisch leitende Flüssigkeit unter Überdruck steht.

6. Magnetventil nach Anspruch 1 bis 5, <u>dadurch gekenn-zeichnet</u>, daß die magnetisch leitende Flüssigkeit auch den Spalt zwischen Spule (11) und dem Gehäuse (12) des Magnetventils ausfüllt.

7. Magnetventil nach Anspruch 1 bis 6, <u>dadurch gekenn-zeichnet</u>, daß der Spalt (3) an einen Ausgleichsbehälter für die magnetisch leitende Flüssigkeit ange-schlossen ist.

FIG. 1

FIG. 2

0052177

# EUROPÄISCHER RECHERCHENBERICHT

**0052177**

Nummer der Anmeldung

EP 81 10 5165.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | "Soviet Inventions Illustrated" Week C 06, 19. März 1980 Section Q 66 & SU - A - 663936 -- | 1,3,7 |
| X | Patents Abstracts of Japan Band 4, Nr. 29, 14. März 1980 Seite 16M2 & JP - A - 55 - 2872 -- | 1 |
| Y | DE - U - 1 945 805 (BOSCH) * Anspruch 1; Fig. 1 * -- | 1,3 |
| Y | US - A - 3 157 831 (RAY) * Spalte 3, Zeilen 35 bis 59; Fig. 1 * -- | 1,4,5 |
| Y | DE - B - 1 235 091 (DANFOSS) * Anspruch 1; Fig. 1 * -- | 1,4,7 |
| Y | CH - A - 541 755 (ROHE) * Spalte 3, Zeilen 36 bis 60; Fig. 1 * -- | 1,4 |
| Y | DE - U - 1 930 265 (DANFOSS) * Anspruch 1; Fig. 1 * -- | 1,4 |
| | ./.. | |

**KLASSIFIKATION DER ANMELDUNG (Int Cl.³)**

F 16 K 31/06

H 01 F 7/16

**RECHERCHIERTE SACHGEBIETE (Int. Cl.³)**

F 16 K 31/00

H 01 F 7/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 08-02-1982 | SCHLABBACH |

EPA form 1503.1 06.78

**Europäisches Patentamt**

**EUROPÄISCHER RECHERCHENBERICHT**

| EINSCHLÄGIGE DOKUMENTE | | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| Y | US - A - 3 159 774 (DUBE et al.) <br> * Fig. 2, 4 * <br> -- | 1 | |
| Y | DE - A - 1 539 731 (BBC) <br> * Seite 1, Zeilen 10 bis 18 * <br> -- | 6 | |
| A | US - A - 3 970 112 (BERNARD) <br> ---- | | |
| | | | RECHERCHIERTE SACHGEBIETE (Int. Cl.³) |

EPA Form 1503.2  06.78